# EUROPEAN PATENT APPLICATION

(11) **EP 4 279 457 A1**
(43) Date of publication of application: **22.11.2023**
(21) Application number: 22847857.4
(22) Date of filing: 23.03.2022
(51) Int. Cl.: C01G 53/00, H01M 4/36, H01M 4/505, H01M 4/525, H01M 4/62, H01M 10/0525

(54) **DOPING AND COATING METHOD, METHOD FOR MODIFYING TERNARY POSITIVE ELECTRODE MATERIAL USING SAME, AND USE**

(30) Priority: 30.07.2021 CN 202110872905
(71) Applicant: SVOLT ENERGY TECHNOLOGY CO., LTD, Changzhou, Jiangsu 213200 (CN)
(72) Inventor: WAN, Jiangtao, hangzhou, Jiangsu 213200 (CN); ZHANG, Ning, hangzhou, Jiangsu 213200 (CN); ZHANG, Yongjie, hangzhou, Jiangsu 213200 (CN); LIU, Manku, hangzhou, Jiangsu 213200 (CN); LIU, Haisong, hangzhou, Jiangsu 213200 (CN); JIANG, Weijun, hangzhou, Jiangsu 213200 (CN)
(74) Representative: Cabinet Beaumont
(86) International application number: PCT/CN2022/082494
(87) International publication number: WO 2023/005237

(57) **Abstract**

The present disclosure provides a doping and coating method, a method for modifying a ternary positive electrode material using same, and the use. The doping and coating method comprises: mixing a doping and coating additive with a co-solvent, pre-sintering, washing, and drying to obtain a low-melting-point additive, and performing, by using a sintering method, doping treatment and/or coating on a material to be modified. According to the method, the sintering temperature and time of doping and coating can be properly reduced, the doping uniformity and the coating bonding firmness are properly improved, and the process requirements are reduced.

## Description

### TECHNICAL FIELD

The present disclosure relates to the technical field of material preparation and modification, and relates to a doping-coating method, a method for modifying a ternary positive electrode material using the same and an application thereof.

### BACKGROUND

The Ni-Co-Mn ternary positive electrode materials have always been playing an important role in new energy lithium battery materials. With the continuous study and development of such materials, it is found that the materials can be improved in the safety, cycle performance and rate capability to a certain extent through appropriate doping and coating, allowing the materials to fully explore the overall electrochemical performance. Nowadays, doping and coating have become an essential step in the preparation of ternary positive electrode materials, especially high nickel ternary materials that have high quality.

There are many reported methods of doping and coating. Those methods have good modification effects but also some shortcomings. It needs further study and optimization about how to realize doping and coating by a simple and easy method as well as better doping and coating effects.

With respect to most of the existing processes for doping and coating, Li source is added via mixing hydroxide precursor physically, and sintered with the doping additive to achieve the doping effect, and then subjected to secondary sintering of mixed materials, being mixed with nano-scale coating oxides and sintered; some of the existing methods perform co-precipitation doping directly in the precursor stage and then mixing nano-scale coating oxides; some adopt doping-coating methods such as wet co-precipitation external coating, sol-gel coating and atomic coating, etc.; and some adopt the spray method to perform doping and coating operation at one step.

The similarity between doping and coating is using oxide or hydroxide raw materials of metal or non-metal. The compounds for doping and coating metal elements mostly have high melting point, leading to high doping and coating temperature, and thus the doping uniformity and coating firmness will have a certain defect, impairing the final doping and coating effects.

### SUMMARY

In one embodiment, the present disclosure provides a doping-coating method, a method for modifying a ternary positive electrode material using the same and an application thereof. The doping-coating method comprises the following steps:
(1) mixing a doping-coating additive with a co-solvent, and performing pre-sintering, washing and drying to obtain a low melting point additive; and
(2) doping and/or coating a material to be modified with the low melting point additive by a sintering method.

The term "doping-coating method" in the present disclosure is not limited to subjecting the material to both doping and coating, but can also be only doping, or only coating. The specific method is based on the actual process performed in step (2).

The term "doping-coating additive" in the present disclosure can be either a doping additive or a coating additive. The type is not specifically limited, and those skilled in the art can choose the commonly used doping additives and coating additives as need.

In one embodiment provided by the present disclosure, a small amount of doping-coating additives is sintered with a co-solvent, there is little residue after the washing, and additionally, because the amount of low melting point additive is also very small in the subsequent sintering process, usually less than 1%, there are hardly any impurity phases introduced.

In one embodiment provided by the present disclosure, by a molten salt pre-sintering method, a doping-coating additive (for example, a compound of the element for doping and coating) is firstly mixed with a co-solvent and pre-sintered to convert into a low melting point compound (also called a low melting point additive), and then the co-solvent is washed away, and then such material is used for doping and/or coating. The advantages of this method are as follows: firstly, the sintering temperature and time for doping and coating can be appropriately reduced, and the sintering temperature of coating is about 10-50°C lower than that of ordinary oxides, and good doping and coating effect can still be achieved by reducing the time by 0.5-3 h; secondly, the uniformity of doping and the firmness of coating can be appropriately improved, and the capacity and the initial efficiency are not affected, and the cycle performance is improved by 0.5-2%; thirdly, the process requirements can be reduced, for example, the particle size requirement of the doping-coating additive raw material (for example, a oxide raw material) is not strict, and micron or submicron level can meet the requirement, and the material at around 1 µm also has good processability; besides, for example, the size requirement of low melting point additive used in doping and/or coating is also reduced, and the additive is not necessary to break into particularly small nanomaterials, and generally, the particle size of less than 0.8 µm can satisfy the need.

In the present disclosure, the addition sequence of the co-solvent cannot be changed; if the doping-coating additive, the co-solvent and the material to be treated are directly mixed and sintered, although the sintering temperature and time can be reduced, the doping uniformity and coating firmness cannot be effectively improved, and a part of the co-solvent will remain in the final product and cannot be removed away, leading to the deterioration of product performance.

In one embodiment, the doping-coating additive in step (1) independently comprises at least one of oxides or hydroxides of titanium, aluminum, zinc, calcium, magnesium, zirconium, scandium, yttrium, cerium or vanadium.

In one embodiment, the co-solvent in step (1) comprises at least one of halides, carbonates or hydroxides of lithium, sodium or potassium, and the halides comprise at least one of fluoride, chloride or bromide.

In one embodiment, the co-solvent in step (1) comprises a first co-solvent, a second co-solvent and a third co-solvent, wherein the first co-solvent and the second co-solvent are selected from two of halides or carbonates, and the third co-solvent is hydroxide.

In one embodiment, a molar ratio of the first co-solvent, the second co-solvent and the third co-solvent is (0-5): (0-5): (0-5), by using the mixed molten salt, the melting temperature can be optimized, the content of impurity elements can be reduced, and the composition of the molten salt can be optimized. The molar ratio of the first co-solvent, the second co-solvent and the third co-solvent can be (0.1-5): (0.1-2): (0.1-2), (0.1-2): (0.5-3): (0.5-3), (1-4): (0.5-4): (0.5-4) or (0.5-1.5): (0.5-1.5): (0.5-1.5), etc.

In one embodiment, a molar ratio of the first co-solvent, the second co-solvent and the third co-solvent is (0.1-2): (0.1-2): (1-2).

In one embodiment, the first co-solvent and/or the second co-solvent of the mixed molten salt includes a lithium salt, which is beneficial to reducing the generation of impurity phases and providing active elements to improve electrochemical performance.

In one embodiment, a mass ratio of the doping-coating additive to the co-solvent in step (1) is 1: (0.8-20), such as 1:0.8, 1:1, 1:1.5, 1:2, 1:3, 1:4, 1:5, 1:7, 1:8, 1:10, 1:12, 1:13, 1:14, 1:15, 1:17 or 1:20, etc.

In one embodiment, a mass ratio of the doping-coating additive to the co-solvent in step (1) is 1: (2-10).

In one embodiment, the mixing in step (1) is carried out in a high-speed mixer, and a time of the mixing is 5-10 min, such as 5 min, 6 min, 8 min or 10 min, etc.

In one embodiment, a heating rate of the pre-sintering in step (1) is 3-15°C/min, such as 3°C/min, 5°C/min, 6°C/min, 8°C/min, 10°C/min, 12°C/min or 15°C/min, etc.

In one embodiment, a temperature of the pre-sintering in step (1) is 500-1200°C, such as 500°C, 600°C, 700°C, 750°C, 800°C, 900°C, 1000°C, 1100°C or 1200°C, etc.

In one embodiment, a time of the pre-sintering in step (1) is 2-8 h, such as 2 h, 3 h, 3.5 h, 4 h, 5 h, 6 h, 7 h or 8 h, etc.

In one embodiment, the method includes a crushing step after the pre-sintering and before the washing in step (1).

In one embodiment, the crushing is performed in a manner of grinding.

In one embodiment, a washing agent used in step (1) is water.

In one embodiment, in the washing process, a solid-liquid ratio is 1: (1-3), such as 1:1, 1:1.5, 1:1.7, 1:1.8, 1:2, 1:2.5 or 1:3, etc.

In one embodiment, the washing is accompanied by stirring, and a rotating speed of the stirring is 400-600 rpm, such as 400 rpm, 425 rpm, 450 rpm, 500 rpm, 550 rpm or 600 rpm, etc.

In one embodiment, a temperature of the washing is 40-60°C, such as 40°C, 45°C, 50°C, 55°C or 60°C, etc.

In one embodiment, a time of the washing is 20-30 min, such as 20 min, 22 min, 25 min or 30 min, etc.

In the present disclosure, the washing can be repeated, and the filter residue is directly subjected to the next washing operation after each suction filtration. The repeat times of the washing are not limited, for example, the washing may be repeated 2-3 times.

In one embodiment, the washing water is subjected to evaporation and crystallization, and the co-solvent is reused.

In one embodiment, the low melting point additive is ground to a particle size of less than 0.8 µm in step (1), such as 0.8 µm, 0.7 µm, 0.6 µm, 0.55 µm, 0.52 µm, etc.

The type of the material to be modified is not specifically limited in the present disclosure, and for example, the material may be at least one of an electrode material or a fast ion conductor. The electrode material can be a positive electrode material or a negative electrode material, and the positive electrode material can be a ternary positive electrode material, a cobalt-free binary positive electrode material, lithium iron phosphate, lithium cobaltate, etc., and the fast ion conductor can be lithium aluminum titanium phosphate, lithium aluminum germanium phosphate, etc., but the material is not limited to the above-mentioned materials, and other materials commonly used in the field which are suitable for doping or coating by sintering are applicable to the present disclosure.

In a second aspect, the present disclosure provides a method for modifying a ternary positive electrode material using the method according to the first aspect, which comprises the following steps:
(a) preparing the low melting point additive by the method according to the first aspect;
(b) mixing a ternary positive electrode active material and a doping additive, and performing primary sintering to obtain a primary sintered product; and
(c) crushing the primary sintered product and then mixing with a coating additive, and performing secondary sintering to obtain a modified ternary positive electrode material;
wherein the doping additive in step (b) and the coating additive in step (c) are both selected from the low melting point additive in step (a), and the types of the doping additive and the coating additive can be the same or different.

The types of the doping additive in step (b) and the coating additive in step (c) are not specifically limited in the present disclosure, and those skilled in the art can choose the additive as need. For example, the doping additive can be aluminum oxide, and the coating additive can be zirconium oxide.

In one embodiment, the modified ternary positive electrode material has a spherical morphology.

In one embodiment, a dosage of the doping additive in step (b) is 0-1% (excluding 0%) of a mass of the ternary positive electrode active material, such as 0.01%, 0.02%, 0.05%, 0.1%, 0.5%, 0.6%, 0.8% or 1%, etc.

In one embodiment, a temperature of the primary sintering in step (b) is 820-910°C, such as 820°C, 850°C, 880°C, 900°C or 910°C, etc.

In one embodiment, a time of the primary sintering in step (b) is 5-20 h, such as 5 h, 6 h, 8 h, 10 h, 12 h, 13 h, 15 h, 16 h, 18 h or 20 h, etc.

In one embodiment, a dosage of the doping additive in step (c) is 0.01-1% of a mass of the primary sintered product, such as 0.01%, 0.05%, 0.1%, 0.2%, 0.3%, 0.4%, 0.5%, 0.6%, 0.8% or 1%, etc.

In one embodiment, a temperature of the secondary sintering in step (c) is 300-800°C, such as 300°C, 400°C, 500°C, 550°C, 600°C, 650°C, 700°C or 800°C, etc.

In one embodiment, a time of the secondary sintering in step (c) is 1-8 h, such as 1 h, 2 h, 3 h, 5 h, 6 h, 7 h or 8 h, etc.

In one embodiment, the method for modifying a ternary positive electrode material comprises the following steps:
(a) mixing a doping additive with a co-solvent, and performing pre-sintering, washing, and drying to obtain a low melting point doping additive, and then performing wet grinding with ethanol as a dispersant for 0.5-2 h, so that a particle size of the low melting point doping additive is less than 0.8 µm;
   mixing a coating additive with a co-solvent, and performing pre-sintering, washing, and drying to obtain a low melting point coating additive, and then performing wet grinding with ethanol as a dispersant for 0.5-2 h, so that a particle size of the low melting point coating additive is less than 0.8 µm;
(b) mixing a ternary positive electrode active material with a low melting point doping additive, wherein a dosage of the low melting point doping additive is 0-1% (excluding 0%) of a mass of the ternary positive electrode active material, and performing sintering at 820-910°C for 5-20 h to obtain a primary sintered product; and
(c) crushing the primary sintered product and then mixing with the low melting point coating additive, wherein a dosage of the low melting point coating additive is 0.01-1% of a mass of the primary sintered product, and performing sintering at 300-800°C for 1-8 h to obtain a modified ternary positive electrode material.

In one embodiment provided by the present disclosure, a ternary material is prepared by pre-mixing a doping additive and a coating additive separately with a co-solvent, pre-sintering, washing, drying, grinding, mixing and primary sintering, and mixing and secondary sintering; by selecting the co-solvent as a raw material, the high melting point compound is melted and sintered to convert into a low melting point compound, and then the prepared low melting point compound is used for doping and coating with good effect, which can appropriately reduce the temperature of doping and coating and improve the doping and coating effects. The doping additive and the coating additive are converted into low melting point substances through step (a), which are easier to realize doping and coating, so as to obtain better doping and coating effects; after washing, the residual co-solvent can be effectively removed, the product purity can be improved, and the generation of impurity phases can be reduced.

The doping-coating method provided by one embodiment of the present disclosure can also be used to prepare a fast ion conductor, such as lithium aluminum titanium phosphate and lithium aluminum germanium phosphate, for doping and coating.

In one embodiment, the present disclosure provides a modified ternary positive electrode material prepared by the doping-coating method, which comprises a ternary positive electrode material core with a doping element and a coating layer on the ternary positive electrode material core, and the coating layer contains a coating element.

The doping element are evenly distributed in the modified ternary positive electrode material prepared by the above method, and the coating layer is uniform and compact, which is beneficial to improving the comprehensive performance of the material.

The present disclosure provides a lithium ion battery in one embodiment, which includes the modified ternary positive electrode material.

### BRIEF DESCRIPTION OF DRAWINGS

The accompanying drawings are used to provide a further understanding of the technical scheme of the present disclosure, and constitute a part of the specification, and serve to explain the technical scheme of the present disclosure together with the embodiments of the present application, but do not constitute a limitation on the technical scheme of the present disclosure.

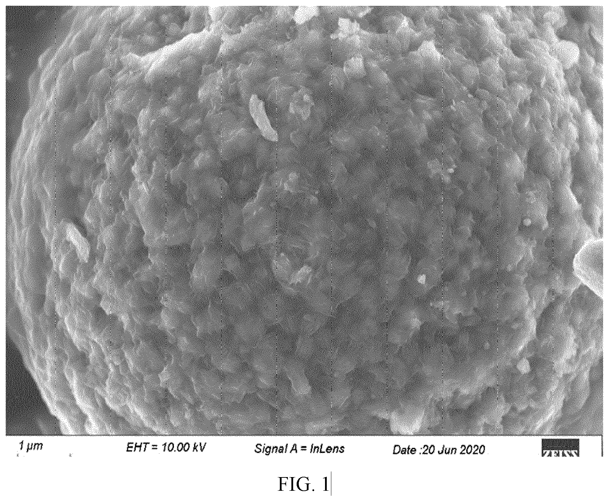

FIG. 1 is an SEM image of a modified ternary positive electrode material in Example 1 of the present disclosure.

### DETAILED DESCRIPTION

The technical scheme of the present disclosure will be further explained hereinafter through specific embodiments and the accompanying drawings. It should be clear to those skilled in the art that the embodiments are only used for a better understanding of the present disclosure and should not be regarded as specific limitations on the present disclosure.

### Example 1

This example provides a modified ternary positive electrode material, which includes an Aldoped Ni-Co-Mn core and a coating layer on the core, and the coating layer contains coating element Al.

This example also provides a preparation method of the modified ternary positive electrode material, which includes the following steps:
(1) pre-mixing: an additive and a co-solvent were pre-mixed in a high-speed mixer for 10 min according to a weight ratio of 1:2;
   in this example, the additive was aluminum oxide, and the co-solvent was a mixture of sodium hydroxide, lithium carbonate and potassium chloride in a molar ratio of 1:1:1; the mixed molten salt can optimize the melting temperature, reduce the content of impurity elements, and optimize the composition of molten salt;
(2) pre-sintering: the mixed materials were put into a sagger, heated at a heating rate of 5°C/min, and sintered at 600°C for 2 h;
(3) washing: the pre-sintered product was preliminarily crushed, and then put into pure water to wash the co-solvent away, wherein a solid-liquid ratio was 1: 1; a stirring speed was 500 rpm, a washing temperature was 50°C, and a washing time was 30 min, the washing was repeated twice, and after each suction filtration, the filter residue was directly subjected to the next washing operation; the washing water was subjected to evaporation and crystallization, and the co-solvent was reused;
(4) drying and crushing: the washed solid particles were dried, and then ground with ethanol as a dispersant for 0.5 h to have a particle size of less than 0.8 µm, so as to obtain a low melting point additive;
(5) mixing and primary sintering: the low melting point additive obtained in step (4) was added according to NCM811: low melting point additive (weight ratio) = 100:0.3, and NCM811 was subjected to primary sintering at 850°C for 15 h to obtain a primary sintered product; and
(6) mixing and secondary sintering: the primary sintered product was crushed, then mixed with the low melting point additive obtained in step (4), which was 0.8% of a mass of the crushed product, and subjected to secondary sintering at 550°C for 3 h to obtain the modified ternary positive electrode material.

### Example 2

This example provides a modified ternary positive electrode material, which includes a Tidoped Ni-Co-Mn core and a coating layer on the core, and the coating layer contains coating element Ti.

This example also provides a preparation method of the modified ternary positive electrode material, which includes the following steps:
(1) pre-mixing: an additive and a co-solvent were pre-mixed in a high-speed mixer for 10 min according to a weight ratio of 1:5;
   in this example, the additive was titanium dioxide, and the co-solvent was a mixture of sodium chloride, lithium hydroxide and potassium fluoride in a molar ratio of 2: 1:0.2; the mixed molten salt can optimize the melting temperature, reduce the content of impurity elements, and optimize the composition of molten salt;
(2) pre-sintering: the mixed materials were put into a sagger, heated at a heating rate of 8°C/min, and sintered at 700°C for 2 h;
(3) washing: the pre-sintered product was preliminarily crushed, and put into pure water to wash the co-solvent away, wherein a solid-liquid ratio was 1:1; a stirring speed was 500 rpm, a washing temperature was 50°C, and a washing time was 30 min, the washing was repeated twice, and after each suction filtration, the filter residue was directly subjected to the next washing operation; the washing water was subjected to evaporation and crystallization, and the co-solvent was reused;
(4) drying and crushing: the washed solid particles were dried, and then ground for 1 h with ethanol as a dispersant to have a particle size of less than 0.8 µm, so as to obtain a low melting point additive;
(5) mixing and primary sintering: the low melting point additive obtained in step (4) was added according to NCM811 polycrystal: low melting point additive (weight ratio) = 100:0.5, and NCM811 polycrystal was subjected to primary sintering at 810°C for 12 h to obtain a primary sintered product; and
(6) mixing and secondary sintering: the primary sintered product was crushed, then mixed with the low melting point additive obtained in step (4), which was 0.3% of a mass of the crushed product, and subjected to secondary sintering at 680°C for 3 h to obtain the modified ternary positive electrode material.

### Example 3

This example provides a modified ternary positive electrode material, which includes an NCM811 core and a coating layer on the NCM811 core, and the coating layer contains coating element Ti, Al and P.

This example also provides a preparation method of the modified ternary positive electrode material, which includes the following steps:
(1) pre-mixing: an additive and a co-solvent were pre-mixed in a high-speed mixer for 10 min according to a weight ratio of 1: 10;
   in this example, the additive was titanium dioxide, aluminum oxide and ammonium dihydrogen phosphate (in a molar ratio of 1.7:0.15:3.0), and the co-solvent was a mixture of sodium chloride, lithium hydroxide, potassium bromide in a molar ratio of 1:2:0.1; the mixed molten salt can optimize the melting temperature, reduce the content of impurity elements, and optimize the composition of molten salt;
(2) pre-sintering: the mixed materials were put into a sagger, heated at a heating rate of 10°C/min, and sintered at 1100°C for 5 h;
(3) washing: the pre-sintered product was preliminarily crushed, and then put into pure water to wash the co-solvent away, wherein a solid-liquid ratio was 1:2; a stirring speed was 500 rpm, a washing temperature was 50°C, and a washing time was 30 min, the washing was repeated twice, and after each suction filtration, the filter residue was directly subjected to the next washing operation; the washing water was subjected to evaporation and crystallization, and the co-solvent was reused;
(4) drying and crushing: the washed solid particles were dried, and then ground for 1 h with ethanol as a dispersant to have a particle size of less than 0.8 µm, so as to obtain a low-melting point additive;
(5) mixing and primary sintering: NCM811 polycrystal was subjected to primary sintering at 800°C for 12 h without additive added, and a primary sintered product was obtained; and
(6) mixing and secondary sintering: the primary sintered product was crushed, then mixed with the low melting point additive obtained in step (4), which was 0.6% of a mass of the crushed product, and subjected to secondary sintering at 450°C for 5 h to obtain the modified ternary positive electrode material.

### Example 4

The difference between this example and Example 1 is that in step (1), the co-solvent was sodium hydroxide, and the co-solvent content was the same as Example 1.

### Example 5

The difference between this example and Example 1 is that in step (1), a weight ratio of the additive and the co-solvent was 1:0.5.

### Example 6

The difference between this example and Example 1 is that in step (1), a weight ratio of the additive and the co-solvent was 1: 15.

### Comparative Example 1

The difference between this comparative example and Example 1 is that the steps (1)-(4) were not carried out, and aluminum oxide was directly crushed to the same particle size as that after the crushing of step (4) in Example 1, and subsequently used for the mixing and primary sintering of step (5) and the mixing and secondary sintering of step (6).

### Comparative Example 2

The difference between this comparative example and Comparative Example 1 is that the primary sintering in step (5) was performed at 880°C for 15.5 h; the secondary sintering in step (6) was performed at 575°C for 4 h.

### Comparative Example 3

This comparative example provides a preparation method of a modified ternary positive electrode material, which includes the following steps:
(1) mixing and primary sintering: NCM811, an additive and a co-solvent were mixed according to a weight ratio of 100:0.3:0.15, wherein the additive was aluminum oxide (with a particle size of less than 0.8 µm) and the co-solvent was a mixture of sodium hydroxide, lithium carbonate and potassium chloride according to a molar ratio of 1:1:1, and subjected to primary sintering at 850°C for 15 h to obtain a primary sintered product; and
(2) mixing and secondary sintering: the primary sintered product was crushed, then mixed with an additive which was 0.8% of a mass of the crushed product and subjected to secondary sintering at 550°C for 3 h to obtain the modified ternary positive electrode material.

### Performance testing:

The positive electrode materials prepared in each example and comparative example were manufactured into positive electrodes, and assembled into button batteries; the electrochemical performance was tested to obtain the capacity of per gram product at 0.1C and the initial efficiency, and the capacity retention after 50 cycles at 1C/1C; the results are shown in Table 1.

**Table 1**

| | Capacity of per gram product at 0.1C (mAh) | Initial efficiency (%) | Capacity retention after 50 cycles at 1C/1C (%) |
|---|---|---|---|
| Example 1 | 202 | 89 | 98.2 |
| Example 2 | 207 | 91 | 98.3 |
| Example 3 | 208 | 91.5 | 98.5 |
| Example 4 | 201.5 | 88.6 | 97.3 |
| Example 5 | 201.8 | 88.8 | 97.4 |
| Example 6 | 202.2 | 89.1 | 98.3 |
| Comparative Example 1 | 201 | 88 | 96.8 |
| Comparative Example 2 | 195 | 85.5 | 97.8 |
| Comparative Example 3 | 201.2 | 88.1 | 96.9 |

As can be seen from Table 1, the method of the present disclosure can be effectively improve the doping and/or coating effect, and thereby improve the electrochemical performance of the material.

Based on the comparison between Example 1 and Example 4, it can be seen in the case where NaOH is used as a single co-solvent to replace the mixed molten salt of Example 1, although the material cost is slightly reduced, the electrochemical performance of the final product is reduced, especially the cycle performance, perhaps due to the worse solubilizing effect and more impurity phases that might be generated.

Based on the comparison between Example 1 and Examples 5-6, it can be seen that if the co-solvent content is too low, the solubilizing effect will be reduced and the cycle performance will be reduced; if the co-solvent content is too high, the solubilizing effect will not be further improved.

Based on the comparison between Example 1 and Comparative Examples 1-2, it can be seen that the capacity, initial efficiency and cycle performance of the final product will be reduced without the co-solvent processing step, and even if the sintering temperature and time are increased, the doping and coating effect still cannot be effectively improved, and the capacity and initial efficiency will be greatly reduced.

Based on the comparison between Example 1 and Comparative Example 3, it can be seen that the electrochemical performance of the product can hardly be improved by directly adding co-solvent and performing primary sintering, and the solubilizing effect cannot be reflected.

It should be noted that the method of the present disclosure is not limited to the doping and/or coating of ternary positive electrode materials, but also has good applicability to the preparation of other electrode materials or other fast ion conductors.

## Claims

1. A doping-coating method, comprising the following steps:
(1) mixing a doping-coating additive with a co-solvent, and performing pre-sintering, washing, and drying to obtain a low melting point additive; and
(2) doping and/or coating a material to be modified with the low melting point additive by a sintering method.

2. The doping modification method according to claim 1, wherein the doping-coating additive in step (1) independently comprises at least one of oxides or hydroxides of titanium, aluminum, zinc, calcium, magnesium, zirconium, scandium, yttrium, cerium or vanadium.

3. The doping modification method according to claim 1 or 2, wherein the co-solvent in step (1) comprises at least one of halides, carbonates or hydroxides of lithium, sodium or potassium, and the halides comprise at least one of fluoride, chloride or bromide.

4. The doping modification method according to any one of claims 1 to 3, wherein the co-solvent in step (1) comprises a first co-solvent, a second co-solvent and a third co-solvent, wherein the first co-solvent and the second co-solvent are selected from two of halides or carbonates, and the third co-solvent is hydroxide;
a molar ratio of the first co-solvent, the second co-solvent and the third co-solvent is (0-5): (0-5): (0-5).

5. The doping modification method according to any one of claims 1 to 4, wherein a mass ratio of the doping-coating additive to the co-solvent in step (1) is 1: (0.8-20).

6. The doping-coating method according to any one of claims 1 to 5, wherein the mixing in step (1) is carried out in a high-speed mixer, a time of the mixing is 5-10 min.

7. The doping-coating method according to any one of claims 1 to 6, wherein a temperature rise rate of the pre-sintering in step (1) is 3-15°C/min, a temperature of the pre-sintering in step (1) is 500-1200°C, and a time of the pre-sintering in step (1) is 2-8 h.

8. The doping-coating method according to any one of claims 1 to 7, wherein a washing agent used in the washing in step (1) is water, a solid-liquid ratio is 1: (1-3) during the washing, and the washing is accompanied by stirring, a rotating speed of the stirring is 400-600 rpm, and a temperature of the washing is 40-60°C, a time of the washing is 20-30 min, and the washing is repeated 2-3 times.

9. A method for modifying a ternary positive electrode material using the doping-coating method according to any one of claims 1 to 8, comprising the following steps:
(a) preparing the low melting point additive by the method according to any one of claims 1 to 5;
(b) mixing a ternary positive electrode active material with a doping additive, and performing primary sintering to obtain a primary sintered product; and
(c) crushing the primary sintered product and then mixing with a coating additive, and performing secondary sintering to obtain a modified ternary positive electrode material;
wherein the doping additive in step (b) and the coating additive in step (c) are both selected from the low melting point additive in step (a).

10. The method according to claim 9, wherein a dosage of the doping additive in step (b) is 0-1% (excluding 0%) of a mass of the ternary positive electrode active material.

11. The method according to claim 9 or 10, wherein a temperature of the primary sintering in step (b) is 820-910°C, and a time of the primary sintering in step (b) is 5-20 h.

12. The method according to claim 9, wherein a dosage of the doping additive in step (c) is 0.01-1% of a mass of the primary sintered product, a temperature of the secondary sintering in step (c) is 300-800°C, and a time of the secondary sintering in step (c) is 1-8 h.

13. The method according to any one of claims 9 to 12, wherein the method comprises the following steps:
(a) mixing a doping additive with a co-solvent, and performing pre-sintering, washing, and drying to obtain a low melting point doping additive, and then performing wet grinding with ethanol as a dispersant for 0.5-2 h, so that a particle size of the low melting point doping additive is less than 0.8 µm;
mixing a coating additive with a co-solvent, and performing pre-sintering, washing, and drying to obtain a low melting point coating additive, and then performing wet grinding with ethanol as a dispersant for 0.5-2 h, so that a particle size of the low melting point coating additive is less than 0.8 µm;
(b) mixing a ternary positive electrode active material with a low melting point doping additive, wherein a dosage of the low melting point doping additive is 0-1% (excluding 0%) of a mass of the ternary positive electrode active material, and performing sintering at 820-910°C for 5 -20 h to obtain a primary sintered product; and
(c) crushing the primary sintered product and then mixing with the low melting point coating additive, wherein a dosage of the low melting point coating additive is 0.01-1% of a mass of the primary sintered product, and performing sintering at 300-800°C for 1-8 h to obtain a modified ternary positive electrode material.

14. A modified ternary positive electrode material prepared by the method according to any one of claims 9 to 13, which comprises a ternary positive electrode material core with a doping element and a coating layer on the ternary positive electrode material core, wherein the coating layer contains a coating element.

15. A lithium ion battery comprising the modified ternary positive electrode material according to claim 14.
